# FASCICULE DE BREVET EUROPEEN

(11) **EP 2 067 681 B1**
(45) Date de publication et mention de la délivrance du brevet: **01.12.2010**
(21) Numéro de dépôt: 08170641.8
(22) Date de dépôt: 04.12.2008
(51) Int. Cl.: B60W 30/18, B60W 30/20

(54) **Procédé et dispositif de commande d'un embrayage d'une transmission à boîte de vitesses mécanique pilotée permettant d'éviter les oscillations en phase de rampage**
Steuerungsverfahren und -vorrichtung einer Kupplung einer gesteuerten, mechanischen Getriebeeingangswelle zur Vermeidung der Vibrationen in der Schleichphase des Motors
Method and device for controlling the clutch of a transmission with a controlled mechanical gearbox making it possible to avoid fluctuation during the creeping phase

(30) Priorité: 04.12.2007 FR 0759558
(43) Date de publication de la demande: 10.06.2009
(73) Titulaire: Peugeot Citroën Automobiles Société Anonyme, 78170 Velizy Villacoublay (FR)
(72) Inventeur: Chariou, Hervé, 78220, Viroflay (FR)

(56) Documents cités:
- EP-A- 0 536 932
- WO-A-2007/096768
- DE-A1-102005 009 710
- FR-A- 2 739 430
- GB-A- 2 356 438
- US-A1- 2002 045 979

## Description

La présente invention concerne les transmissions en boîte de vitesses mécanique pilotée, autrement appelée BVMP, à simple ou double embrayage.

Plus particulièrement, l'invention concerne un procédé et un dispositif de commande d'un embrayage d'une transmission à boîte de vitesses mécanique pilotée permettant de se prémunir de façon corrective contre les effets de broutement d'embrayage en phase de rampage.

Les boîtes de vitesses mécaniques pilotées disposent d'un calculateur pour la commande d'un actionneur pilotant l'embrayage et de divers capteurs pour assurer une régulation de cet actionneur au niveau de l'embrayage.

Les boîtes de vitesses mécaniques pilotées peuvent ainsi réaliser une prestation de rampage à l'identique d'un conducteur de boîte de vitesses automatique, appelée aussi BVA. A l'arrêt, lorsque le conducteur lève le pied du frein, le véhicule avance sans qu'il soit nécessaire d'enfoncer la pédale d'accélération, uniquement sur la régulation de ralenti.

Ceci est réalisé par le calculateur de la boîte de vitesse mécanique pilotée en pilotant l'actionneur d'embrayage sur une consigne de position assurant une transmission de couple suffisante pour assurer le décollage du véhicule puis sur une consigne de vitesse maximale pour assurer un cheminement à vitesse constante souvent différente entre marche avant première ou seconde et marche arrière.

Les embrayages sont assez dispersés au niveau production, et varient en fonction des conditions d'usure et de température en fonctionnement. La régulation de rampage permet de s'affranchir de ces dispersions en pilotant une consigne d'accélération saturée par une consigne de vitesse maximale pour assurer le cheminement du véhicule en rampage établi. En cas de dépassement ou de retard par rapport à la consigne, l'embrayage transmettant plus ou moins de couple qu'estimé, une régulation va intervenir pour maintenir l'accélération du véhicule puis la vitesse sur sa consigne respective. Cette régulation de rampage est très efficace vis-à-vis de ces dispersions sauf en cas de broutement.

Le broutement est un phénomène d'excitation de la chaîne cinématique allant de l'arbre primaire de la boîte de vitesses jusqu'aux roues, qui se manifeste par la transmission d'un couple variable. Il apparaît sous la forme de vibrations de la caisse et des trains roulants. Il est généré par des défauts de géométrie ou des variations du coefficient de frottement des garnitures d'embrayage.

Ce phénomène aléatoire, bien connu en boîte de vitesses mécanique manuelle BVM est amplifié par la régulation de rampage en boîtes de vitesses mécaniques pilotées BVMP. Pour maintenir la vitesse de cheminement, la régulation peut imposer une position fixe de l'embrayage dans la zone de broutement. Le couple transmis oscille alors fortement et le conducteur va ressentir le phénomène.

Avec une boîte de vitesse mécanique, le conducteur pilote l'embrayage par la pédale d'embrayage. En cas de broutement, il détecte le phénomène par les vibrations du véhicule et va modifier la position de commande de la pédale d'embrayage et d'accélération pour quitter la zone de broutement.

Le document FR-A-2 739 430 décrit un procédé permettant de limiter l'apparition de vibrations dans une chaîne de traction. En connaissant la plage de fréquences critiques, il est possible d'intervenir sur le couple transmis afin de contrer l'apparition de ces vibrations. Cependant ce document n'est pas relatif à une phase de rampage mais concerne plutôt un mode de fonctionnement en embrayage fermé. Son enseignement ne permet pas à l'homme de métier de traiter le problème particulier du phénomène de broutement lors d'un rampage.

Le document US 2002 045 979 A1, considéré comme l'art antérieur le plus proche, décrit un appareil selon le préambule de la revendication 7 et un procédé, selon la revendication 1, dans lequel une chaine de traction d'un véhicule automobile est pilotée afin d'éviter un phénomène de broutement provoquant des oscillations de la transmission lors de la demande d'une consigne de vitesse maximale de la transmission du véhicule. Ce procédé comprenant les étapes suivantes: détection d'oscillations survenant dans la transmission, mémorisation de la position d'embrayage lors de l'apparition des oscillations, et correction de la consigne de vitesse maximale par réduction ou augmentation de celle ci.

Le problème à la base de l'invention est, dans le cadre de l'utilisation d'une boîte de vitesses mécanique pilotée dans une transmission, de détecter rapidement, lors d'une phase de rampage de l'embrayage, un phénomène de broutement survenant, de sortir de cette zone de broutement et d'éviter que ce phénomène ne se reproduise par sauvegarde des données relatives à ce phénomène pour une exécution automatique ultérieure des consignes anti-broutement.

A cet effet, l'invention a pour objet un procédé de commande d'un embrayage dans une transmission à boîte de vitesses mécanique pilotée d'un véhicule automobile afin d'éviter un phénomène de broutement provoquant des oscillations de cette transmission lors d'un rampage avec une consigne de vitesse maximale d'un élément de la transmission ou du véhicule, ce procédé comprenant les étapes suivantes :
- détection d'oscillations survenant dans la transmission,
- mémorisation de la position d'embrayage lors de l'apparition des oscillations ainsi que des données de fonctionnement de la transmission à ce moment,
- correction de la consigne de vitesse maximale par réduction ou augmentation de celle-ci.

Selon des caractéristiques additionnelles du procédé:
- la consigne de vitesse maximale concerne le régime de l'arbre primaire Nclt,
- l'étape de détection d'oscillations comprend un traitement d'un ou de signaux en provenance de moyens capteurs disposés sur des éléments de la transmission,
- les signaux traités, individuellement ou pris en combinaison, concernent la vitesse primaire ou secondaire, la vitesse véhicule,
- la mémorisation de la consigne de vitesse maximale, lors de l'apparition des oscillations ainsi que des données de fonctionnement de la transmission, permettent une étape d'asservissement en position de l'embrayage quand la transmission est confrontée aux mêmes données de fonctionnement ayant entraîné les oscillations,
- les données de fonctionnement comprennent, entre autres, la température garniture, la température moteur, le couple moteur, la consigne de ralenti, ces données étant prises individuellement ou en combinaison pour piloter l'asservissement en position de l'embrayage.

L'invention concerne aussi un dispositif de commande d'un embrayage dans une transmission à boîte de vitesses mécanique pilotée pour la mise en oeuvre d'un tel procédé, comprenant des moyens de pilotage de l'embrayage, exerçant notamment le pilotage de l'embrayage lors d'un rampage de celui-ci selon une consigne de vitesse maximale, des moyens capteurs disposés sur des éléments de la transmission et des moyens de commande comprenant des moyens de calcul pour la détermination du pilotage de l'embrayage, **caractérisé en ce qu**'il comprend des moyens de détection d'oscillations dans la transmission qui sont associés à ces moyens de commande, des moyens de mesure de position des moyens de pilotage de l'embrayage et des données de fonctionnement de l'embrayage, des moyens de mémorisation pour sauvegarder dans ces moyens de commande la position des moyens de pilotage et les données de fonctionnement de l'embrayage lors de l'apparition de ces oscillations, les moyens de calcul des moyens de commande étant aptes à déterminer un changement de la consigne de vitesse maximale à appliquer aux moyens de pilotage de l'embrayage, ce changement de consigne devant être suffisant pour faire sortir l'embrayage de la zone dans laquelle se produisent les oscillations.

La régulation en rampage peut être, avantageusement, assurée par une consigne d'accélération limitée en étant saturée par la consigne de régime maximal du régime de l'arbre primaire ou d'un arbre équivalent,

La régulation peut se faire, avantageusement, à l'aide d'un correcteur de type PID, P, PI ou PI2 ou un autre circuit du type régulateur à dérivateur d'ordre non entier du type CRONE ou l'élément T d'un correcteur RST discrétisé, avec ou sans filtre numérique.

Avantageusement, les moyens de pilotage de l'embrayage sont électriques, hydrauliques ou pneumatiques assurant un pilotage de l'embrayage en position, en effort ou en pression.

Préférentiellement, ces moyens de pilotage agissent sur l'embrayage directement ou indirectement.

La position, l'effort ou la pression sont, avantageusement, mesurés par des moyens capteurs associés et une régulation en position, effort ou en pression est assurée par les moyens de commande.

L'invention concerne aussi une transmission à boîte de vitesses mécanique pilotée comprenant un simple ou double embrayage, **caractérisée en ce que**, lors de l'apparition d'oscillations dans celle-ci pendant la phase de rampage de l'embrayage ou des embrayages, celui-ci ou ceux-ci est ou sont pilotés conformément à un tel procédé ou en ce qu'elle comprend un tel dispositif de commande d'un ou de deux embrayages.

L'invention concerne, en outre, un véhicule automobile, **caractérisé en ce qu**'il comprend une telle transmission à boîte de vitesses mécanique pilotée.

L'invention va maintenant être décrite plus en détail mais de façon non limitative en regard des figures annexées, dans lesquelles :
- la figure 1 montre respectivement la courbe de régime théorique du véhicule en fonction du temps et celle obtenue après correction PID,
- la figure 2 montre respectivement la courbe de régime moteur et la courbe de régime arbre primaire en fonction du temps dans une situation de rampage avec apparition d'oscillations de broutement,
- la figure 3 montre respectivement la courbe de régime moteur et la courbe de régime arbre primaire en fonction du temps dans une situation de rampage avec apparition d'oscillations de broutement, ce broutement étant corrigé selon un procédé conformément à la présente invention.

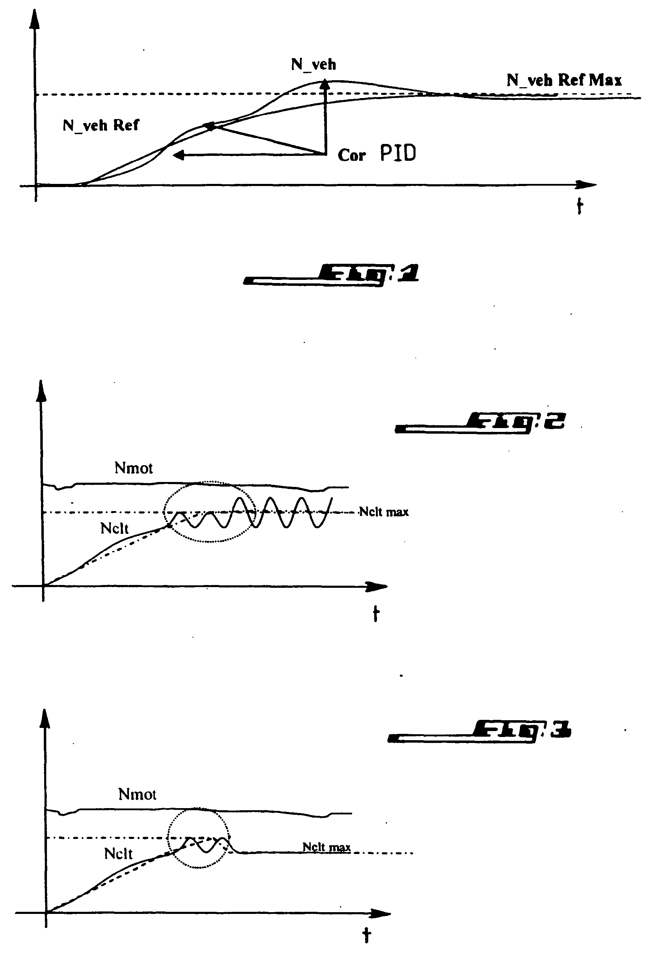

La figure 1 montre l'effet d'une régulation du régime véhicule lors d'un rampage. Cette régulation peut se faire, par exemple, par une correction PID.

La courbe non signalée par les flèches est la courbe théorique de régime véhicule N veh Ref en fonction du temps t. Dans une situation normale de rampage pour une transmission à boîte de vitesses mécanique pilotée, celui-ci est assuré par une consigne d'accélération limitée de régime véhicule saturée par une consigne de régime maximal N veh Ref max, comme on le verra à la figure 2.

Une correction est cependant nécessaire du fait que l'embrayage peut transmettre plus ou moins de couple qu'estimé ce qui entraîne un dépassement ou un retard par rapport à la consigne. Cette correction cor PID est faite de manière connue selon un modèle PID bien que cela ne soit pas la seule correction possible. La courbe N veh est donc asservie pour suivre la courbe N veh Ref théorique.

La figure 2 montre respectivement la courbe de régime moteur et la courbe de régime arbre primaire en fonction du temps dans une situation de rampage avec apparition d'oscillations de broutement.

Dans une situation normale de rampage pour une transmission à boîte de vitesses mécanique pilotée, celui-ci est assuré par une consigne d'accélération limitée D(Nclt)/dt de régime de l'arbre primaire saturée par une consigne de régime maximal Nclt max. Ces paramètres de rampage sont prédéterminés, notamment en ce qui concerne la vitesse et l'accélération réglables par calibration.

Lorsque le véhicule a atteint la consigne de régime maximal Nclt max, l'embrayage en prise est piloté sur une position généralement fixe permettant de conserver la consigne en l'absence de toutes perturbations. Une boucle de régulation assure cette fonction, souvent par une régulation PID, mais pas exclusivement.

Un phénomène de broutement particulièrement amplifié peut survenir quand le régime de l'arbre primaire Nclt est voisin de la consigne de régime maximal Nclt max. Ce broutement entraîne des oscillations du régime de l'arbre primaire autour de la consigne de régime maximal Nclt max.

Il est à noter qu'un phénomène de broutement peut se manifester aussi pour d'autres régimes d'arbre primaire que la consigne de régime maximal.

Selon la présente invention, le procédé de commande d'un embrayage dans une transmission à boîte de vitesses mécanique pilotée d'un véhicule automobile afin d'éviter un phénomène de broutement provoquant des oscillations de cette transmission lors d'un rampage avec une consigne de vitesse maximale d'un élément de la transmission ou du véhicule, ce procédé comprenant les étapes suivantes :
- détection d'oscillations survenant dans la transmission,
- mémorisation de la position d'embrayage lors de l'apparition des oscillations ainsi que des données de fonctionnement de la transmission à ce moment,
- correction de la consigne de vitesse maximale par réduction ou augmentation de celle-ci.

L'effet technique obtenu par la présente invention est illustré par la figure 3. Cette figure montre respectivement la courbe de régime moteur Nmot et la courbe de régime arbre primaire Nclt en fonction du temps t dans une situation de rampage avec apparition d'oscillations de broutement et correction de ce broutement.

Après l'apparition des premières oscillations de broutement dans la zone cerclée de pointillés, la correction selon l'invention s'exerce sur la consigne de régime maximal Nclt max et réduit ou augmente celle-ci. A la figure 3, celle-ci est diminuée. L'embrayage est donc commandé dans le sens de l'ouverture de façon à éviter la zone de broutement en rampage.

L'invention concerne aussi un dispositif de commande d'un embrayage dans une transmission à boîte de vitesses mécanique pilotée pour la mise en oeuvre comme précédemment décrit. Ce dispositif comprend des moyens de pilotage de l'embrayage, exerçant notamment le pilotage de l'embrayage lors d'un rampage de celui-ci selon une consigne de vitesse maximale, des moyens capteurs disposés sur des éléments de la transmission et des moyens de commande comprenant des moyens de calcul pour la détermination du pilotage de l'embrayage. Les boîtes de vitesses mécaniques pilotées disposent ainsi classiquement d'un calculateur du type TCU/ TCM et également de capteurs de vitesse de l'arbre primaire/secondaire Nclt, directement ou indirectement, de l'information de mesure du régime moteur Nmot et de la vitesse des roues du véhicule Nveh. Selon la présente invention, le dispositif comprend des moyens de détection d'oscillations dans la transmission qui sont associés à ces moyens de commande, des moyens de mesure de position des moyens de pilotage de l'embrayage et des données de fonctionnement de l'embrayage, des moyens de mémorisation pour sauvegarder dans ces moyens de commande la position des moyens de pilotage et les données de fonctionnement de l'embrayage lors de l'apparition de ces oscillations, les moyens de calcul des moyens de commande étant aptes à déterminer un changement de la consigne de vitesse maximale à appliquer aux moyens de pilotage de l'embrayage, ce changement de consigne devant être suffisant pour faire sortir l'embrayage de la zone dans laquelle se produisent les oscillations.

Le calculateur va détecter l'apparition du phénomène, mémoriser la position de l'embrayage et les conditions d'apparition, notamment, mais pas exclusivement, la température estimée ou mesurée d'apparition. Ensuite la vitesse de consigne maximale doit être adaptée pour quitter et éviter la zone de broutement soit en réduisant la consigne ou en l'augmentant. L'embrayage sera donc commandé dans le sens ouverture ou fermeture de façon à éviter la zone de broutement.

Le dispositif est adaptatif dans le sens ou la consigne peut être sauvegardée par le calculateur, par exemple TCU/TCM pour que le conducteur ne soit plus confronté à ce phénomène à chaque phase d'entrée en rampage. L'embrayage sera commandé par le calculateur de façon à éviter la position dans laquelle se produit un broutement en rampage.

La régulation en rampage peut être assurée par une consigne d'accélération limitée en étant saturée par la consigne de régime maximal sur le régime de l'arbre primaire ou d'un arbre équivalent.

La régulation se fait, par exemple, à l'aide d'un correcteur de type PID, P, PI ou PI2 ou un autre circuit du type régulateur à dérivateur d'ordre non entier du type CRONE ou l'élément T d'un correcteur RST discrétisé, avec ou sans filtre numérique.

Un tel procédé ou un tel dispositif permet d'éviter les phénomènes de broutement en phase de rampage pour les applications boîtes de vitesses mécaniques pilotées simples ou à double embrayage, ce qui n'avait pas encore été résolu jusqu'à présent.

L'invention n'est nullement limitée au mode de réalisation décrit et illustré qui n'a été donné qu'à titre d'exemple.

## Revendications

1. Procédé de commande d'un embrayage dans une transmission à boîte de vitesses mécanique pilotée d'un véhicule automobile afin d'éviter un phénomène de broutement provoquant des oscillations de cette transmission lors d'un rampage avec une consigne de vitesse maximale (Nclt max) d'un élément de la transmission ou du véhicule, ce procédé comprenant les étapes suivantes :
- détection d'oscillations survenant dans la transmission,
- mémorisation de la position d'embrayage lors de l'apparition des oscillations ainsi que des données de fonctionnement de la transmission à ce moment,
- correction de la consigne de vitesse maximale par réduction ou augmentation de celle-ci.

2. Procédé selon la revendication 1, **caractérisé en ce que** la consigne de vitesse maximale concerne le régime de l'arbre primaire (Nclt).

3. Procédé selon la revendication 1 ou 2, **caractérisé en ce que** l'étape de détection d'oscillations comprend un traitement d'un ou de signaux en provenance de moyens capteurs disposés sur des éléments de la transmission.

4. Procédé selon l'une quelconque des revendications précédentes, **caractérisé en ce que** les signaux traités, individuellement ou pris en combinaison, concernent le régime de l'arbre primaire (Nclt) ou secondaire, le régime véhicule (V veh).

5. Procédé selon l'une quelconque des revendications précédentes, **caractérisé en ce que** la mémorisation de la consigne de vitesse maximale (Nclt max), lors de l'apparition des oscillations ainsi que des données de fonctionnement de la transmission, permettent une étape d'asservissement en position de l'embrayage quand la transmission est confrontée aux mêmes données de fonctionnement ayant entraîné les oscillations.

6. Procédé selon la revendication 5, **caractérisé que** les données de fonctionnement comprennent, entre autres, la température garniture, la température moteur, le couple moteur, la consigne de ralenti, ces données étant prises individuellement ou en combinaison pour piloter l'asservissement en position de l'embrayage.

7. Dispositif de commande d'un embrayage dans une transmission à boîte de vitesses mécanique pilotée pour la mise en oeuvre du procédé selon l'une quelconque des revendications 1 à 6, comprenant des moyens de pilotage de l'embrayage, exerçant notamment le pilotage de l'embrayage lors d'un rampage de celui-ci selon une consigne de vitesse maximale (Nclt max), des moyens capteurs disposés sur des éléments de la transmission et des moyens de commande comprenant des moyens de calcul pour la détermination du pilotage de l'embrayage, **caractérisé en ce qu'**il comprend des moyens de détection d'oscillations dans la transmission qui sont associés à ces moyens de commande, des moyens de mesure de position des moyens de pilotage de l'embrayage et des données de fonctionnement de l'embrayage, des moyens de mémorisation pour sauvegarder dans ces moyens de commande la position des moyens de pilotage et les données de fonctionnement de l'embrayage lors de l'apparition de ces oscillations, les moyens de calcul des moyens de commande étant aptes à déterminer un changement de la consigne de vitesse maximale (Nclt max) à appliquer aux moyens de pilotage de l'embrayage, ce changement de consigne devant être suffisant pour faire sortir l'embrayage de la zone dans laquelle se produisent les oscillations.

8. Dispositif de commande selon la revendication 7, **caractérisé en ce que** la régulation en rampage est assurée par une consigne d'accélération limitée en étant saturée par la consigne de régime maximal (Nclt max) du régime de l'arbre primaire ou d'un arbre équivalent.

9. Dispositif de commande selon l'une quelconque des revendications 7 ou 8, **caractérisé en ce que** la régulation se fait à l'aide d'un correcteur de type PID, P, PI ou PI2 ou un autre circuit du type régulateur à dérivateur d'ordre non entier du type CRONE ou l'élément T d'un correcteur RST discrétisé, avec ou sans filtre numérique.

10. Dispositif selon l'une quelconque des revendications 7 à 9, **caractérisé en ce que** les moyens de pilotage de l'embrayage sont électriques, hydrauliques ou pneumatiques assurant un pilotage de l'embrayage en position, en effort ou en pression.

11. Dispositif selon la revendication 10, **caractérisé en ce que** ces moyens de pilotage agissent sur l'embrayage directement ou indirectement.

12. Dispositif selon la revendication 10 ou 11, **caractérisé en ce que** la position, l'effort ou la pression sont mesurés par des moyens capteurs associés et qu'une régulation en position, effort ou en pression est assurée par les moyens de commande.

13. Transmission à boîte de vitesses mécanique pilotée comprenant un simple ou double embrayage, **caractérisée en ce que**, lors d'apparition d'oscillations dans celle-ci pendant la phase de rampage de l'embrayage ou des embrayages, celui-ci ou ceux-ci est ou sont pilotés conformément au procédé selon l'une quelconque des revendications 1 à 6 ou **en ce qu'**elle comprend un dispositif de commande d'un embrayage selon l'une quelconque des revendication 7 à 12.

14. Véhicule automobile, **caractérisé en ce qu'**il comprend une transmission à boîte de vitesses mécanique pilotée selon la revendication 13.

## Claims

1. Method for controlling a clutch in a transmission with a controlled mechanical gearbox of an automobile vehicle so as to avoid a chattering phenomenon causing oscillations of this transmission on creeping with a maximum speed set point (Nclt max) of an element of the transmission or of the vehicle, this method comprising the following stages:
- detection of oscillations occurring in the transmission,
- storing of the clutch position on the appearance of the oscillations and also transmission functioning data at this moment,
- correction of the maximum speed set point by reduction or increase thereof.

2. Method according to Claim 1, **characterized in that** the maximum speed set point concerns the speed of the primary shaft (Nclt).

3. Method according to Claim 1 or 2, **characterized in that** the oscillation detection stage comprises a processing of one signal or signals originating from pickup means arranged on elements of the transmission.

4. Method according to any one of the preceding claims, **characterized in that** the processed signals, individually or taken in combination, concern the speed of the primary shaft (Nclt) or secondary shaft, the vehicle speed (V veh).

5. Method according to any one of the preceding claims, **characterized in that** the storage of the maximum speed set point (Nclt max), on the appearance of the oscillations and also the transmission functioning data, allow a stage for automatically controlling the position of the clutch when the transmission is confronted with the same functioning data having entrained the oscillations.

6. Method according to Claim 5, **characterized in that** the functioning data comprise, inter alia, the lining temperature, the engine temperature, the engine torque, the idling set point, these data being taken individually or in combination to guide the automatic control of position of the clutch.

7. Device for controlling a clutch in a transmission with a controlled mechanical gearbox for implementing the method according to any one of Claims 1 to 6, comprising means for controlling the clutch, exercising in particular the controlling of the clutch on a creeping thereof according to a maximum speed set point (Nclt max), pickup means arranged on elements of the transmission and control means comprising calculation means for determining the controlling of the clutch, **characterized in that** it comprises oscillation detection means in the transmission which are associated with these control means, means for measuring the position of the control means of the clutch and the functioning data of the clutch, storage means to safeguard in these control means the position of the controlling means and the functioning data of the clutch on the appearance of these oscillations, the calculating means of the control means being suited to determine a change in the maximum speed set point (Nclt max) to apply to the controlling means of the clutch, this change in set point being sufficient to cause the clutch to leave the zone in which the oscillations occur.

8. Control device according to Claim 7, **characterized in that** the creeping regulation is ensured by a limited acceleration set point by being saturated by the maximum speed set point (Nclt max) of the speed of the primary shaft or of an equivalent shaft.

9. Control device according to any one of Claims 7 or 8, **characterized in that** the regulation is carried out by means of a corrector of the PID, P, PI or PI2 type, or another circuit of the regulator to derivator type of non-integer order of the CRONE type or the element T of a discretized RST corrector, with or without numerical filter.

10. Device according to any one of Claims 7 to 9, **characterized in that** the controlling means of the clutch are electric, hydraulic or pneumatic, ensuring a controlling of the clutch in position, in stress or in pressure.

11. Device according to Claim 10, **characterized in that** these controlling means act on the clutch directly or indirectly.

12. Device according to Claim 10 or 11, **characterized in that** the position, the stress or the pressure are measured by associated pickup means and that a regulation in position, stress or pressure is ensured by the control means.

13. Controlled mechanical gearbox transmission comprising a single or double clutch, **characterized in that**, on the appearance of oscillations in the latter during the creeping phase of the clutch or of the clutches, the latter or these latter is or are controlled in accordance with the method according to any one of Claims 1 to 6 or **in that** it comprises a control device of a clutch according to any one of Claims 7 to 12.

14. Automobile vehicle, **characterized in that** it comprises a controlled mechanical gearbox transmission according to Claim 13.

## Patentansprüche

1. Verfahren zum Steuern einer Kupplung in einem geregelten mechanischen Schaltgetriebe eines Kraftfahrzeugs, um eine Rupferscheinung zu vermeiden, die Schwingungen dieses Schaltgetriebes bei einem Schleichen mit einem maximalen Drehzahlsollwert (Nclt max) eines Elements des Schaltgetriebes oder des Fahrzeugs erzeugt, wobei dieses Verfahren die folgenden Schritte aufweist:
- Erfassen von Schwingungen, die in dem Schaltgetriebe auftreten,
- Speichern der Kupplungsposition beim Erscheinen der Schwingungen sowie Speichern der Betriebsdaten des Schaltgetriebes in diesem Augenblick,
- Korrigieren des maximalen Drehzahlsollwerts durch dessen Verringerung oder Erhöhung.

2. Verfahren nach Anspruch 1, **dadurch gekennzeichnet, dass** der maximale Drehzahlsollwert die Drehzahl der Hauptwelle (Nclt) betrifft.

3. Verfahren nach Anspruch 1 oder 2, **dadurch gekennzeichnet, dass** der Schritt des Erfassens von Schwingungen eine Verarbeitung eines oder mehrerer Signale, die von Sensormitteln stammen, die auf Elementen des Schaltgetriebes angeordnet sind, aufweist.

4. Verfahren nach einem der vorhergehenden Ansprüche, **dadurch gekennzeichnet, dass** die verarbeiteten Signale einzeln oder kombiniert genommen die Drehzahl der Hauptwelle (Nclt) oder Nebenwelle, die Fahrzeugdrehzahl (V veh) betreffen.

5. Verfahren nach einem der vorhergehenden Ansprüche, **dadurch gekennzeichnet, dass** das Speichern des maximalen Drehzahlsollwerts (Nclt max) beim Erscheinen der Schwingungen sowie das Speichern der Betriebsdaten des Schaltgetriebes einen Schritt des Positionssteuerns der Kupplung erlauben, wenn das Schaltgetriebe mit den gleichen Betriebsdaten wie die, die die Schwingungen verursacht haben, konfrontiert ist.

6. Verfahren nach Anspruch 5, **dadurch gekennzeichnet**, durch die Betriebsdaten unter anderem die Bremsbelagtemperatur, die Motortemperatur, das Motordrehmoment, den Leerlaufsollwert umfassen, wobei diese Daten einzeln oder in Kombination genommen werden, um die Positionssteuerung der Kupplung zu regeln.

7. Steuervorrichtung einer Kupplung in einem geregelten mechanischen Schaltgetriebe zum Umsetzen des Verfahrens nach einem der Ansprüche 1 bis 6, die Regelmittel der Kupplung aufweist, die insbesondere das Regeln der Kupplung bei einem Schleichen dieser gemäß einem maximalen Drehzahlsollwert (Nclt max) ausüben, Sensormittel, die auf Elementen des Schaltgetriebes angeordnet sind, und Steuermittel, die Rechenmittel aufweisen, um das Regeln der Kupplung zu bestimmen, **dadurch gekennzeichnet, dass** sie Mittel zum Erfassen von Schwingungen in dem Schaltgetriebe aufweist, die mit diesen Steuermitteln verbunden sind, Mittel zum Positionsmessen der Regelmittel der Kupplung und der Betriebsdaten der Kupplung, Speichermittel, um in diesen Steuermitteln die Position der Regelmittel und die Betriebsdaten der Kupplung beim Erscheinen diese Schwingungen zu speichern, wobei die Rechenmittel der Steuermittel eine Änderung des maximalen Drehzahlsollwerts (Nclt max), der auf die Regelmittel der Kupplung anzuwenden ist, bestimmen können, wobei diese Sollwertänderung ausreichen muss, um die Kupplung aus dem Bereich zu bringen, in dem die Schwingungen auftreten.

8. Steuervorrichtung nach Anspruch 7, **dadurch gekennzeichnet, dass** die Schleichregelung von einem Beschleunigungssollwert sichergestellt wird, der begrenzt wird, indem er durch den maximalen Drehzahlsollwert (Nclt max) der Drehzahl der Hauptwelle oder einer gleichwertigen Welle gesättigt wird.

9. Steuervorrichtung nach einem der Ansprüche 7 oder 8, **dadurch gekennzeichnet, dass** die Regelung mit Hilfe eines Reglers des Typs PID, P, PI oder PI2 oder einem anderen Schaltkreis des Typs Regler mit Steuerung eines nicht ganzen Befehls des Typs CRONE (Commande Robuste d'Ordre Non Entier, Robuste Steuerung eines nicht ganzen Befehls) oder T-Element eines diskretisierten RST-Reglers mit oder ohne digitalem Filter erfolgt.

10. Vorrichtung nach einem der Ansprüche 7 bis 9, **dadurch gekennzeichnet, dass** die Regelmittel der Kupplung elektrisch, hydraulisch oder pneumatisch sind und ein Positionsregeln der Kupplung mit Kraft oder Druck sicherstellen.

11. Vorrichtung nach Anspruch 10, **dadurch gekennzeichnet, dass** diese Regelmittel direkt oder indirekt auf die Kupplung einwirken.

12. Vorrichtung nach Anspruch 10 oder 11, **dadurch gekennzeichnet, dass** die Position, die Kraft oder der Druck mit dazugehörenden Sensormitteln gemessen werden, und dass eine Positions-, Kraft- oder Druckregelung von den Steuermitteln sichergestellt wird.

13. Geregeltes mechanisches Schaltgetriebe, das eine einfache oder doppelte Kupplung aufweist, **dadurch gekennzeichnet, dass** bei dem Auftreten von Schwingungen in dieser während der Schleichphase der Kupplung oder der Kupplungen, diese gemäß dem Verfahren nach einem der Ansprüche 1 bis 6 geregelt wird oder werden, oder dass sie eine Steuervorrichtung einer Kupplung nach einem der Ansprüche 7 bis 12 aufweist.

14. Kraftfahrzeug, **dadurch gekennzeichnet, dass** es einen gesteuertes mechanisches Schaltgetriebe nach Anspruch 13 aufweist.
